## Europäisches Patentamt

## European Patent Office

## Office européen des brevets

(19)

(11) Numéro de publication: **0 018 297**
**B1**

(12) ## FASCICULE DE BREVET EUROPEEN

(45) Date de publication du fascicule du brevet: **27.04.83**

(51) Int. Cl.³: **B 60 R 1/06**

(21) Numéro de dépôt: **80400544.5**

(22) Date de dépôt: **21.04.80**

(54) Rétroviseur extérieur commandé de l'intérieur d'un véhicule.

(30) Priorité: **24.04.79 FR 7910411**

(43) Date de publication de la demande:
**29.10.80 Bulletin 80/22**

(45) Mention de la délivrance du brevet:
**27.04.83 Bulletin 83/17**

(84) Etats contractants désignés:
**DE GB**

(56) Documents cités:
**DE - A - 2 436 339**
**FR - A - 2 299 182**
**FR - A - 2 378 654**

(73) Titulaire: **BRITAX (GECO) S.A.**
**1 et 3 Route d'Héricy**
**F-77870 Vulaines s Seine (FR)**

(72) Inventeur: **Desforges, Patrick James**
**65, rue du Docteur Siffre**
**F-77930 - Perthes-en Gatinais (FR)**
Inventeur: **Harry, Jean Michel**
**68, avenue de la Forêt**
**F-77210 - Avon (FR)**

(74) Mandataire: **Phélip, Bruno et al,**
**c/o Cabinet Harlé & Phélip 21, rue de La**
**Rochefoucauld**
**F-75009 Paris (FR)**

Courier Press, Leamington Spa, England.

Rétroviseur extérieur commandé de l'intérieur d'un véhicule

La présente invention concerne un rétroviseur extérieur à coupelle orientable commandé de l'intérieur d'un véhicule.

Les rétroviseurs extérieurs susceptibles d'être commandés de l'intérieur d'un véhicule doivent absolument satisfaire à un certain nombre de conditions assez rigoureuses. Ces conditions sont d'ordre pratique, telles qu'une bonne accessibilité de la commande, une commande douce et précise, un entretien facile, etc... Ce sont aussi des conditions de sécurité telles que, par exemple, la possibilité pour la coupelle du rétroviseur de s'effacer complètement le long de la carrosserie du véhicule en cas de choc latéral, ce qui impose nécessairement des articulations particulières entre la coupelle et son embase. Enfin, et surtout, ces conditions sont d'ordre économique et concernent principalement la structure du dispositif qui ne doit comporter qu'un minimum de pièces, de manière à réduire les coûts et faciliter le montage afin d'économiser des heures de main d'oeuvre.

Les rétroviseurs extérieurs connus actuellement satisfont généralement très bien aux conditions pratiques et aux conditions de sécurité énumérées ci-dessus, mais, en ce qui concerne les conditions économiques, ces rétroviseurs comportent généralement un trop grand nombre de pièces et sont d'une complexité telle que, dans la fabrication automobile, ils sont généralement réservés aux véhicules de haut de gamme.

C'est le cas notamment du rétroviseur décrit dans la demande de brevet allemand DE—A—2.436.339 qui, bien que comportant un mode d'articulation économique de la coupelle sur son embase, réunit dans un montage assez compliqué un nombre de pièces important, la complexité de l'ensemble résultant du fait que le miroir est prévu orientable à l'intérieur d'une coupelle fixe.

On connaît par ailleurs un rétroviseur réglable décrit dans la demande de brevet publiée FR—A—2.299.182, ce rétroviseur comportant un miroir fixé dans une coupelle orientable ce qui simplifie son montage mais, pour que la coupelle soit rabattable en cas de choc, elle est reliée à son embase par une double articulation, ce qui complique sa réalisation et augmente son coût.

Or, compte-tenu de la tendance allant dans le sens d'une amélioration constante des conditions de sécurité, il apparaît de plus en plus nécessaire que tous les véhicules, et non pas seulement ceux de haut de gamme, soient équipés de ces rétroviseurs réglables de l'intérieur du véhicule.

Le but de la présente invention est donc de proposer un rétroviseur extérieur commandé de l'intérieur d'un véhicule qui satisfasse à la fois aux conditions pratiques, aux conditions de sécurité et, surtout, aux strictes conditions économiques actuelles, grâce au faible nombre de pièces mises en jeu et à sa simplicité de montage.

Selon l'invention, le rétroviseur extérieur commandé de l'intérieur d'un véhicule comprend une embase fixée sur ledit véhicule, un dispositif de commande d'orientation logé dans l'embase, et un miroir marté dans une coupelle rabattable qui est maintenue appliquée sur l'embase par un moyen élastique et repose sur trois appuis répartis en triangle, ce rétroviseur étant caractérisé en ce que la coupelle est orientable autour d'un de ses appuis et en ce qu'un autre desdits appuis est déplaçable à l'aide du dispositif de commande.

Le système de maintien sollicitant élastiquement la coupelle en direction de l'embase peut être constitué par un ressort de compression en appui contre la face interne de la paroi de la coupelle adjacente à l'embase et par un câble souple traversant ledit ressort et dont une extrémité est attachée à celui-ci, tandis que l'autre extrémité est ancrée sur l'embase, ledit câble étant tendu de manière à comprimer le ressort.

De préférence, le dispositif de commande comporte un premier bouton tubulaire monté tournant sur l'embase, un second bouton logé coaxialement dans le premier bouton et muni d'une partie filetée, un embout comportant un doigt d'entraînement excentré dont l'extrémité est engagée dans une rainure ménagée dans la face en regard de la paroi adjacente de la coupelle, ledit embout étant monté coulissant dans un alésage de l'embase et claveté par rapport au premier bouton de commande, et un élément fileté associé audit embout et vissé sur la partie filetée du second bouton de manière à transformer une rotation de ce dernier en un mouvement de translation de l'embout sensiblement perpendiculairement à la paroi adjacente de la coupelle.

L'invention va maintenant être décrite plus en détail en se référant à des modes de réalisation particuliers cités à titre d'exemple non limitatif et représentés sur les dessins annexés dans lesquels:

Fig. 1 est une vue schématique en perspective du système d'articulation de la coupelle sur l'embase selon l'invention.

Fig. 2 représente une coupe dans un plan parallèle au plan du miroir de la coupelle et passant par la ligne II—II de la figure 1.

Fig. 3 est une coupe dans un plan passant par la ligne III—III de la figure 1.

Fig. 4 est une coupe d'un premier mode de réalisation du rétroviseur, ladite coupe étant effectuée dans un plan perpendiculaire au plan du miroir et passant par la ligne IV—IV de la figure 1.

Fig. 5 est une coupe d'un second mode de réalisation du rétroviseur selon l'invention, ladite coupe étant effectuée dans un plan perpendiculaire au plan du miroir.

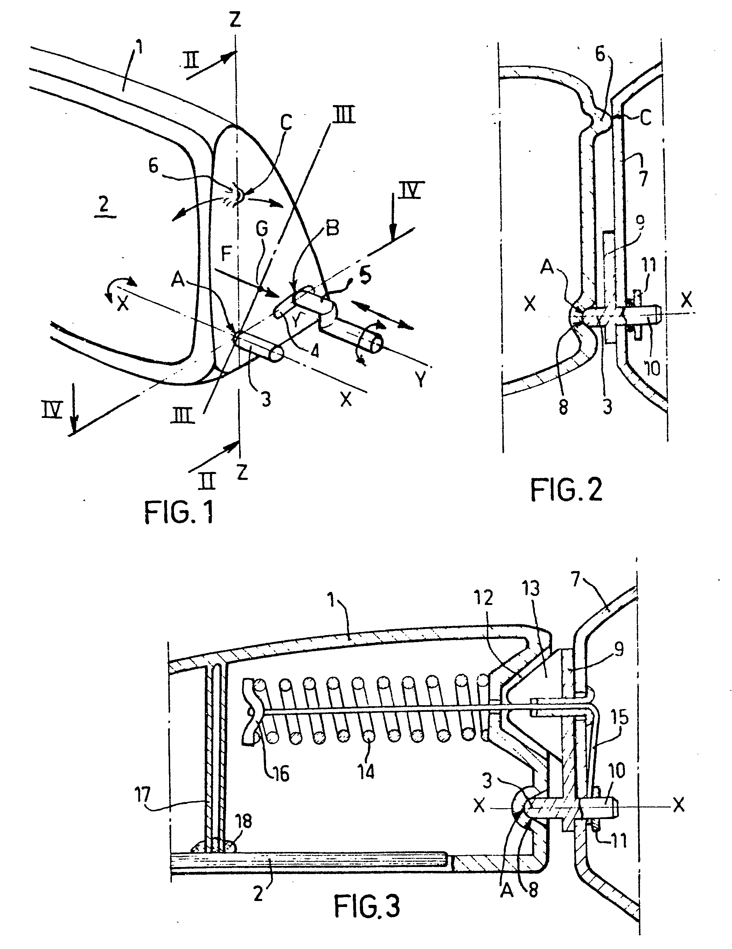

Telle que représentée sur la figure 1, la coupelle 1, munie d'un miroir fixe 2, d'un rétroviseur selon l'invention, se caractérisé par le fait qu'elle s'articule sur son embase (non représentée) par l'intermédiaire de trois aires de contact A, B, C disposées en triangle et qu'elle est fermement maintenue appliquée contre son embase par un effort d'application F perpendiculaire au plan défini par les trois aires de contact A, B et C et dont la ligne d'action passe par le centre de gravité G du triangle formé par lesdites aires A, B et C. Etant donné que, pour des raisons de sécurité, la coupelle des rétroviseurs extérieurs doit être rabattable, l'effort d'application F est engendré par un moyen élastique susceptible de céder sous l'action d'un choc latéral contre la coupelle, et d'exercer à nouveau son effort dès que le choc a cessé.

En A, la coupelle 1 prend appui et peut osciller autour de l'axe x-x d'un pivot fixe 3. En B, la coupelle 1 comporte une rainure transversale 4 dans laquelle s'engage l'extrémité d'un doigt excentré 5 susceptible de tourner autour d'un axe y-y parallèle à l'axe x-x du pivot 3 et susceptible également de se déplacer longitudinalement parallèlement audit axe y-y. Enfin, en C, la coupelle 1 comporte un téton 6 prenant appui en bout sur la surface en regard de l'embase 7 (figure 2).

De par sa conception, et comme on le comprend aisément en se référant à la figure 1, la coupelle 1 peut osciller autour de deux axes perpendiculaires, à savoir l'axe x-x qui est l'axe du pivot 3 et l'axe z-z défini par les deux aires A et B et confondu avec la ligne II—II sur la figure 1.

En effet, lorsque le doigt excentré 5 oscille autour de son axe de rotation y-y comme indiqué par les flèches sur la figure 1, l'extrémité dudit doigt 5, qui est engagée dans la rainure 4 de la coupelle, entraîne celle-ci vers le bas ou vers le haut dans un mouvement d'oscillation autour de l'axe x-x. En outre, lorsque ce doigt d'entraînement 5 est animé d'un mouvement de translation parallèlement à son axe de rotation y-y, il exerce sur la coupelle 1 un couple de rotation qui la fait osciller autour de son axe z-z, le rappel étant assuré par le système élastique d'application qui la sollicite en direction de l'embase 7.

Comme on peut le voir sur la figure 2, le téton 6 est poinçonné en saille sur la face de la coupelle située en regard de l'embase 7 tandis que, au niveau de l'aire de contact A, l'extrémité arrondie du pivot 3 vient se loger au fond d'une cavité hémisphérique 8 poinçonnée en retrait dans ladite face de la coupelle 1, l'extrémité du pivot 3 et la cavité sphérique 8 constituant une articulation multidirectionnelle à la manière d'une rotule. On notera que le pivot 3 fait partie intégrante d'une plaque 9 montée pivotante sur l'embase 7 par l'intermédiaire d'une queue 10 s'étendant dans le prolongement du pivot 3 et à l'opposé de celui-ci par rapport à la plaque 9, le verrouillage étant effectué au moyen d'une goupille 11 traversant ladite queue 10.

Le système d'application élastique de la coupelle 1 sur son embase 7 est représenté en détail sur la figure 3. La coupelle 1 comporte dans sa paroi adjacente une embase 7 et une cavité en tronc de pyramide 12 dans laquelle s'emboîte un tronc de pyramide correspondant 13 porté par la plaque 9 pouvant pivoter autour de la queue 10 sur l'embase 7. A l'intérieur de la coupelle 1 est disposé un ressort de compression 14 qui prend appui sur la paroi formant le fond de la cavité 12, du côté opposé à celle-ci. Ce ressort de compression 14 est précontraint par l'intermédiaire d'un câble souple 15 qui traverse l'ensemble du ressort 14 selon son axe, ainsi que le fond de la cavité 12, le tronc de pyramide 13, la plaque 9 et la tôle de l'embase 7, une extrémité dudit câble 15 étant accrochée autour de la queue 10 à l'intérieur de l'embase 7, tandis que l'autre extrémité dudit câble s'accroche par l'intermédiaire d'une pièce d'ancrage 16 à l'extrémité libre du ressort 14. Au montage, le câble souple 15 est tendu de manière à précontraindre le ressort 14 et à appliquer fortement la coupelle 1 contre la plaque 9 et contre l'embase 7.

On remarquera la mode de fixation original du miroir 2 sur la coupelle 1. En effet, le miroir 2 n'est pas fixé de manière classique sur son pourtour car ce mode de fixation provoque des déformations du miroir du fait des contraintes engendrées par les déformations de la coupelle dues notamment à des variations de température. Dans le rétroviseur selon l'invention, le front de la coupelle 1 comporte des pattes ou nervures de fixation 17 qui s'étendent perpendiculairement audit front en direction de l'ouverture de ladite coupelle, ces pattes étant situées sensiblement au centre géométrique de cette ouverture. Le miroir 2 est assujetti à l'extrémité de ces pattes ou nervures de fixation à l'aide de plots de résine 18. Du fait que le miroir 2 est fixé sensiblement sur son centre, il échappe pratiquement à toutes les contraintes dues aux déformations de la coupelle.

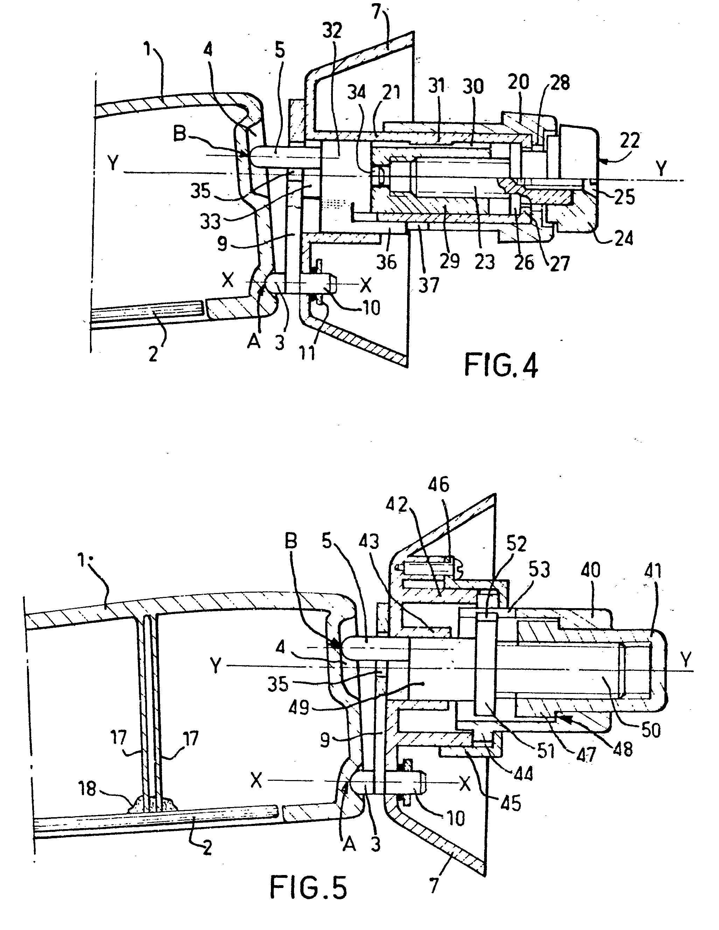

Selon un premier mode de réalisation, le dispositif de commande mécanique de l'orientation de la coupelle, tel que représenté sur la figure 4, comporte un premier bouton de commande tubulaire 20 emmanché tournant sur un appendice central tubulaire cylindrique 21 de l'embase 7, ainsi qu'un second bouton 22 logé axialement à l'intérieur du premier bouton 20 et de l'appendice tubulaire cylindrique 21 de l'embase. Ce second bouton 22 est essentiellement constitué par un corps fileté 23 sur lequel est rapportée une tête 24 molletée extérieurement et fixée sur le corps fileté 23 par intermédiaire d'une vis 25, le corps 23 comportant une collerette 26 assurant simultanément le centrage du bouton 22 à l'intérieur de l'appendice 21 de l'embase 7 et également sa retenue axiale à l'intérieur dudit appendice 21 du fait que ladite collerette 26 vient en butée axiale contre un épaulement annulaire 27 prévu en bout de l'alésage dudit appendice 21. Le premier bouton 20 comporte également une collerette interne annulaire 28 intercalée au montage entre l'épaulement 27 situé en bout de l'alésage de l'appendice 21 et la tête 24 du second bouton 22.

Le dispositif de commande mécanique du rétroviseur selon l'invention comporte également un piston cylindrique creux 29 fileté intérieurement, monté coulissant à l'intérieur de l'alésage de l'appendice cylindrique 21 de l'embase 7 et muni d'une rainure de clavetage longitudinale 30 dans laquelle est engagée une clavette 31 solidaire de la paroi interne de l'alésage de l'appendice 21. Enfin, le dispositif de commande mécanique comporte en outre un embout cylindrique 32 monté coulissant dans l'alésage 33 de l'appendice 21 dans le prolongement du piston 29. Cet embout 32 comporte, sur sa face adjacente au piston 29, un téton de centrage 34, et, sur sa face opposée, un doigt d'entraînement excentré 5, ledit embout comportant en outre un ergot d'entraînement latéral 36 orienté parallèlement à l'axe dudit embout du même côté que le téton de centrage 34. Ledit téton 34 est centré à l'intérieur d'un trou percé dans le fond du piston 29 coaxialement à l'alésage fileté de celui-ci. Le doigt d'entraînement 5 s'étend en direction de la coupelle à travers une lumière 35 ménagée dans la plaque 9 et pénètre à son extrémité dans une rainure transversale 4 ménagée en creux dans la face adjacente de la coupelle.

Quant à l'ergot d'entraînement 36, il s'étend parallèlement à l'axe de l'embout 32 et en direction des deux boutons de commande; cet ergot 36 traverse la paroi de l'alésage 33 de l'appendice 21 à travers une lumière circulaire centrée sur l'axe dudit appendice et pénètre dans une fente longitudinale 37 ménagée en bout dans la jupe tubulaire du bouton 20.

Bien entendu, les deux boutons 20 et 22 sont situés à l'intérieur du véhicule et de manière à être aisément accessibles au conducteur.

Le dispositif de commande décrit ci-dessus fonctionne de la façon suivante.

Lorsque l'opérateur fait tourner le bouton 22, son corps fileté 23 se visse ou se dévisse à l'intérieur du piston 29 selon le sens de rotation du bouton. Le vissage ou le dévissage du corps 23 dans le piston 29 entraîne le coulissement de celui-ci à l'intérieur de l'appendice 21 ainsi que le coulissement de l'embout 32 dont le doigt d'entraînement 5, prenant appui contre B sur la coupelle 1, assure le basculement de celle-ci autour du pivot 3, ce mouvement de translation de l'embout 32 et de basculement de la coupelle 1 permettant le réglage gauche droite du rétroviseur.

Par contre, lorsque l'opérateur fait tourner le bouton 20, celui-ci entraîne en rotation l'embout 32 par l'intermédiaire de la fente 37 et de l'ergot d'entraînement 36, ce qui provoque la rotation autour de l'axe y-y du doigt d'entraînement 5 dont l'extrémité engagée dans les rainures 4 de la coupelle assure le pivotement de celle-ci autour de l'axe x-x du pivot fixe 3, cette manoeuvre permettant d'effectuer un réglage ciel terre du rétroviseur selon l'invention.

Selon un autre mode de réalisation représenté en variante à la figure 4, le dispositif de commande du rétroviseur selon l'invention comporte deux boutons tubulaires 40 et 41 emmanchés axialement l'un dans l'autre tel que le bouton 41 dépasse du bouton 40 vers l'intérieur du véhicule.

L'embase 7 comporte deux appendices tubulaires coaxiaux 42 et 43 orientés vers l'intérieur du véhicule. L'appendice 42 reçoit une extrémité du bouton 40 et sa face en bout sert d'appui à une collerette 44 prévue à la périphérie dudit bouton au voisinage de ladite extrémité. Un couvercle 45 centré sur l'appendice 42 et fixé par des vis 46 à l'embase 7 sert à presser la collerette 44 contre la face en bout de l'appendice 42. Le bouton 41 qui se centre dans le bouton 40 comporte à son extrémité située à l'intérieur dudit bouton 40 un épaulement de butée 47 prenant appui contre un épaulement correspondant 48 prévu dans l'alésage du bouton 40 à la sortie de celui-ci. Les surfaces en contact entre l'épaulement 47 et l'épaulement 48 des deux boutons sont inférieures aux surfaces en contact entre la collerette 44, le couvercle 45 et la face en bout de l'appendice 42.

Le dispositif de commande comporte en outre un embout 49 monté coulissant dans l'alésage débouchant de l'appendice 43 situé coaxialement à l'intérieur de l'appendice 42, ledit embout comportant d'un côté un doigt d'entraînement 5 s'avançant vers l'extérieur en direction de la coupelle 1, et de l'autre côté, une tige filetée 50 qui se visse à l'intérieur de l'alésage filetée du bouton central 41. Entre la tige filetée 50 et le corps coulissant 49 de l'embout est prévue une collerette 51 munie à sa périphérie d'une dent 52 qui est engagée dans une fente 53 ménagée dans la jupe du bouton tubulaire extérieur 40 et débouchant sur le bord de celle-ci.

Comme dans le mode de réalisation précédement décrit et représenté sur la figure 4, le doigt d'entraînement 5 traverse la plaque 9 à travers une échancrure 35 et son extrémité pénètre à l'intérieur d'une rainure 4 ménagée dans la coupelle 1.

Le mode de fonctionnement de ce dispositif de commande est le suivant.

Lorsque l'opérateur tourne le bouton intérieur 41, wa tige filetée 50 de l'embout 49 se visse ou se dévisse à l'intérieur dudit bouton, ce qui provoque le coulissement de l'embout 49 dans l'appendice 43 de l'embase 7, ainsi que le basculement de la coupelle 1 autour de l'extrémité du pivot 3. Cette manoeuvre permet d'effectuer un réglage gauche-droite du rétroviseur selon l'invention.

Si l'opérateur tourne le bouton extérieur 40, il entraîne du même coup en rotation autour de son axe l'embout 49, du fait de l'engrènement de la dent 52 dans la fente 53 du bouton. La rotation de l'embout entraîne celle du doigt d'entraînement 5 qui fait pivoter du même coup la coupelle autour de l'axe x-x de son pivot 3, cette manoeuvre permettant d'effectuer le réglage ciel-terre du rétroviseur.

On notera que, dans le mode de réalisation du dispositif de commande représenté sur la figure 4, le réglage ciel-terre du rétroviseur est totalement indépendant du réglage gauche-droite de celui-ci. En effet, la manoeuvre du bouton extérieur 20, qui provoque la rotation de l'embout 32, n'entraîne absolument aucun mouvement ni du bouton 22, ni du piston associé 29 du fait que l'embout 32 est simplement appliqué entre l'extrémité du piston 29 et n'est absolument pas solidaire de celui-ci; par conséquent, une rotation quelconque de l'embout 32 n'influence en rien le piston 29 et ne provoque donc pas de translation dudit embout 32, ni de basculement gauche-droite consécutif du rétroviseur. Réciproquement, une rotation du bouton intérieur 22 provoque une translation du piston 29 mais non sa rotation du fait qu'il est claveté dans l'alésage 33 de l'appendice 21 de l'embase. Par conséquent, l'embout 32 est simplement déplacé axialement mais absolument pas entraîné en rotation, ce qui n'induit donc aucun basculement consécutif ciel-terre de la coupelle 1 du rétroviseur.

Par contre, dans le mode de réalisation en variante représenté sur la figure 5, les réglages ciel-terre et gauche-droite ne sont pas rigoureusement indépendants. En effet, la queue filetée 50 sur laquelle se visse le bouton intérieur 41 fait partie intégrante de l'embout 49, si bien que toute rotation du bouton 41 sollicite nécessairement en rotation l'embout 49 du fait du frottement entre les filets de vis dudit bouton 41 et de la queue filetée 50 et également du fait du frottement entre les épaulements 47 et 48 en contact des deux boutons 40 et 41, le bouton 40 entraînant alors en rotation l'embout 49 du fait de l'entraînement de la dent 52 dans la rainure 53 de ce bouton. Pour réduire cet inconvénient, et même le supprimer totalement, il suffit de serrer plus ou moins le couvercle 45 qui applique la collerette 44 de l'embout 49 contre la face d'extrémité de l'appendice 42 de l'embase. Compte-tenu du fait que les surfaces de frottement en contact sont supérieures au niveau de ladite collerette à celles situées entre les deux épaulements 47 et 48 des deux boutons, et compte-tenu également du fait que la distance à l'axe y-y desdites surfaces de frottement situées au niveau de la collerette 44 est supérieure à la distance à l'axe des surfaces de frottement situées entre les deux épaulements 47 et 48, le couple de friction au niveau de la collerette 44 peut être beaucoup plus élevé que celui existant entre les deux boutons 40 et 41 au niveau de leurs épaulements. Il s'ensuit qu'une rotation du bouton intérieur 41 n'entraîne pas nécessairement une rotation du bouton extérieur 40 et que l'embout 49 se déplace en translation selon l'axe y-y sans rotation sur lui-même, ce qui permet d'effectuer un réglage gauche-droite de la coupelle 1 sans modifier son réglage ciel-terre. Par contre, lorsque l'opérateur fait tourner le bouton 40, en entraînant simultanément en rotation l'embout 49 qui est claveté audit bouton 40 par l'intermédiaire de sa dent 42 engagée dans la fente 53 du bouton, le frottement existant entre les filets de vis de la tige 50 et du bouton 41 ainsi que les frottements existant entre les deux épaulements 47 et 48 des deux boutons 40 et 41 provoquent la rotation simultanée du bouton intérieur avec celle du bouton extérieur. Autrement dit, du fait que le bouton 41 tourne en même temps que le bouton 40 et l'embout 49, il n'y a pas vissage de la tige 50 dans le bouton 41, donc aucun déplacement axial de l'embout 49, et par conséquent aucune modification du réglage gauche-droite de la coupelle 1 du rétroviseur.

De toute façon, en supposant même qu'une rotation du bouton extérieur 40 ne provoque pas une rotation simultanée du bouton 41, ceci n'a pas grande importance dans la mesure où les filetages prévus sur la tige 50 et à l'intérieur du bouton 41 ont un pas très fin, ce qui impose que le bouton 41 tourne de plusieurs tours pour modifier le réglage gauche-droite de quelques degrés seulement.

Les systèmes proposés ci-dessus selon l'invention présentent de nombreux avantages et, entre autres, le fait de ne comporter qu'un petit nombre de pièces comparativement aux rétroviseurs connus actuellement.

En outre, le fait de remplacer des articulations réelles par des articulations fictives constituées par les trois aires d'appui A, B et C de la coupelle simplifie considérablement à la fois la structure du rétroviseur et son montage ainsi que son réglage. En outre, cette liberté de la coupelle au niveau de ses articulations fictives garantit l'effacement de ladite coupelle sous un choc latéral. De plus, le tronc de pyramide 13 qui s'engage dans la cavité pyramidale 12 correspondante de la coupelle assure une remise en place rapide et précise après la disparition du choc latéral.

Enfin, le fait que le miroir 2 ne soit pas fixé sur sa périphérie permet d'éviter toute déformation de celui-ci en réponse à des déformations de la coupelle elle-même.

Bien entendu, la portée de l'invention n'est pas limitée au seul mode de réalisation décrit précédemment à titre d'exemple non limitatif mais elle s'étend également à toutes variantes qui ne différeraient que par des détails et qui sont couvertes par les revendications dependantes.

## Revendications

1. Rétroviseur extérieur commandé de l'intérieur d'un véhicule, ce rétroviseur comportant
une embase (7) fixée sur le véhicule, un dispositif de commande d'orientation logé dans
l'embase et un miroir (2) monté dans une
coupelle (1) susceptible de se rabattre le long
du véhicule sous l'action d'un choc latéral,
ladite coupelle étant maintenu appliquée par un
moyeu élastique sur l'ensemble fixe formé par
l'embase et le dispositif de commande et reposant par trois appuis (A, B, C) répartis en
triangle, caractérisé en ce que la coupelle (1)
est orientable et peut pivoter autour de l'un de
ses appuis (A) restant fixe par rapport à
l'embase (7), et en ce qu'un second desdits
appuis (B) est mobile et déplaçable au moyen
du dispositif de commande de l'orientation.

2. Rétroviseur selon la revendication 1,
caractérisé en ce que le système de maintien
sollicitant élastiquement la coupelle en direction de l'embase est essentiellement constitué
par un ressort de compression (14) en appui
contre la face interne de la paroi de la coupelle
(1) adjacente à l'embase (7), et par un câble
souple (15) traversant ledit ressort et ayant une
extrémité attachée à celui-ci tandis que son
autre extrémite est ancrée sur l'embase, ledit
câble étant tendu de manière à comprimer le
ressort.

3. Rétroviseur selon l'une des revendications 1 et 2, caractérisé en ce que le dispositif
de commande comporte un premier bouton
tubulaire (20, 40) monté tournant sur l'embase
(7) un second bouton (22, 41) logé coaxialement dans le premier bouton et muni d'une
partie filetée, un embout (32, 49) comportant
un doigt d'entraînement excentré (5) dont
l'extrémité est engagée dans un rainure (4)
ménagée dans la face en regard de la paroi adjacente de la coupelle (1), ledit embout étant
monté coulissant dans un alésage de l'embase
et claveté par rapport au premier bouton (20,
40) de commande, et un élément fileté (29, 50)
associé audit embout et vissé sur la partie
filetée du second bouton de manière à transformer une rotation de ce dernier en un mouvement de translation de l'embout sensiblement
perpendiculairement à la paroi adjacente de la
coupelle.

4. Rétroviseur selon la revendication 3,
caractérisé en ce que l'élément fileté est un
piston creux (29) fileté intérieurement et vissé
sur une tige filetée (23) prolongeant le second
bouton (22), ledit piston comportant une
rainure de clavetage longitudinale (30)
ménagée sur sa surface périphérique externe et
un fond percé dont l'ouverture sert au centrage
d'un téton axial (34) solidaire de l'embout (32).

5. Rétroviseur selon la revendication 3,
caractérisé en ce que l'élément fileté est une
tige filetée (50) prolongeant l'embout (49) du
côté opposé au doigt d'entraînement excentré
(5), ladite tige se vissant à l'intérieur du second
bouton (41) qui est creux et fileté intérieurement.

6. Rétroviseur selon la revendication 5,
caractérisé en ce que le premier bouton (40)
comporte une collerette extérieur (44) périphérique dont les flancs sont pincés entre une surface de butée appartenant à l'embase (7) et un
couvercle (45) fixé sur celle-ci, et en ce que le
second bouton (41) qui est logé coaxialement
dans un alésage du premier comporte un
épaulement de butée (47) prenant appui contre
un épaulement (48) correspondant dudit alésage, les surfaces en contact étant agencées de
telle sorte que le couple de friction sur les flancs
de la collerette soit supérieur au couple de friction entre les épaulements des deux boutons.

## Patentansprüche

1. Vom Innern eines Fahrzeugs betätigter
Außenrückblickspiegel, enthaltend einen am
Fahrzeug befestigten Sitz (7), eine im Sitz angeordnete Richtungseinstellvorrichtung und einen
Spiegel (2), der in einer Schale (1) angeordnet
ist, die fähig ist, unter der Einwirkung eines seitlichen Stoßes längs des Fahrzeugs zu kippen
und mit einer elastischen Nabe auf die feststehende Baugruppe gedrückt wird, die durch
den Sitz und die Richtungseinstellvorrichtung
gebildet wird und von drei in Dreiecksform verteilten Stützen (A, B, C) gehalten wird, dadurch
gekennzeichnet, daß die Schale (1) schwenkbar ist und sich um eine ihrer Stützen (A) zu
drehen vermag, die im Verhältnis zum Sitz (7)
feststehend bleibt, und daß eine zweite der
Stützen (B) mit Hilfe der Richtungseinstellvorrichtung beweglich und verschiebbar ist.

2. Rückblickspiegel nach Anspruch 1, dadurch gekennzeichnet, daß das System der
elastischen Haltung der Schale in Richtung des
Sitzes im wesentlichen aus einer Druckfeder
(14), die sich gegen die Innenfläche der Wand
der Schale (1) angrenzend an den Sitz (7) legt,
und aus eihem elastischen Kabel (15) besteht,
das durch die Feder geführt und mit einem Ende
an dieser befestigt ist, während sein anderes
Ende am Sitz verankert ist, wobei das Kabel in
einer solchen Weise gespannt ist, daß es die
Feder zusammendrückt.

3. Rückblickspiegel nach einem der
Ansprüche 1 und 2, dadurch gekennzeichnet,
daß die Einstellvorrichtung einen ersten, drehbar am Sitz (7) befestigten rohrförmigen Knopf
(20, 40), einen zweiten, koaxial im ersten Knopf
angeordneten und mit einem Gewindeteil
versehenen knopf (22, 41) und ein Übergangsrohrstück (32, 49), das mit einem exzentrischen
Mitnehmerbolzen (5) versehen ist, dessen Ende
in eine Nut (4) greift, die in die Seite rückwärts
von der an die Schale (1) angrenzenden Wand
eingearbeitet ist, wobei der Bolzen gleitend in eine Bohrung des Sitzes eingesetzt und im Verhältnis zum ersten Betätigungsknopf (20, 40) festgekeilt ist, und ein Gewindeteil (29, 50) aufweist, das mit dem Bolzen zusammenwirkt und auf den Gewindeteil des zweiten Knopfes so aufgeschraubt ist, daß eine Drehung des letzteren in eine geradlinige Bewegung des Bolzens im wesentlichen senkrecht zur angrenzenden Wand der Schale umgewandelt wird.

4. Rückblickspiegel nach Anspruch 3, dadurch gekennzeichnet, daß das Gewindebauteil ein Hohlstempel (29) ist, der mit Innengewinde versehen, auf einen den zweiten Knopf (22) verlängernden Gewindestab (23) geschraubt ist und eine in Längsrichtung verlaufende Keilnut (30), die in die äußere Umfangsfläche eingearbeitet ist, und einen durchbohrten Boden aufweist, dessen Öffnung der Zentrierung eines axialen Zapfens (34) dient, der mit dem Rohrstück (32) formschlüssig verbunden ist.

5. Rückblickspiegel nach Anspruch 3, dadurch gekennzeichnet, daß das Gewindeteil ein Gewindestab (50) ist, der das Rohrstück (49) von der Seite verlängert, die dem exzentrischen Mitnehmerbolzen (5) gegenüberliegt, und in das Innere des zweiten Rohrstücks (41) geschraubt ist, das hohl und innen mit Gewinde versehen ist.

6. Rückblickspiegel nach Anspruch 5, dadurch gekennzeichnet, daß der erste Knopf (40) einen peripheren äußeren Flansch (44) aufweist, dessen Flanken zwischen einer zum Sitz (7) gehörenden Anschlagfläche und einem daran befestigten Deckel (45) eingeklemmt sind, und daß der zweite Knopf (41), der koaxial in einer Bohrung des ersteren angeordnet ist, einen Anschlag (47) aufweist, der sich gegen einen Anschlag (48) der Bohrung legt, wobei die sich berührenden Flächen so angeordnet und ausgebildet sind, daß das Reibungspaar an den Flanken des Flansches über dem Reibungspaar zwischen den Anschlägen der beiden Knöpfe liegt.

## Claims

1. Exterior rearview mirror controlled from the interior of a vehicle, the rearview mirror comprising a base (7) fixed on the vehicle, a swivel control device housed in the base and a mirror (2) mounted in a cup (1) adapted to retract along the vehicle under the action of a lateral impact, the said cup being held against the fixed assembly formed by the base and the control device, applied by an elastic means, and bearing by three supports (A, B, C) arranged in a triangle, characterized in that the cup (1) may swivel and is pivotable about one of its supports (A) remaining fixed with respect to the base (7), and in that a second of said supports (B) is movable and displaceable by means of the swivel control device.

2. Rearview mirror according to claim 1, characterized in that the holding system elastically urging the cup in the direction of the base essentially comprises a compression spring (14) bearing against the inner surface of the wall of the cup (1) adjacent the base (7), and a flexible cable (15) extending through the said spring and having one end attached thereto whilst the other end is anchored to the base, the said cable being tensioned so as to compress the spring.

3. Rearview mirror according to one of claims 1 and 2, characterized in that the control device comprises a first tubular button (20, 40) rotationally mounted on the base (7), a second button (22, 41) housed coaxially in the first button and provided with a threaded portion, and end-piece (32, 49) comprising an eccentric drive finger (5) the end of which is engaged in a groove (4) formed in the surface facing the adjacent wall of the cup (1), the said end-piece being slidingly mounted in a bore of the base and keyed with respect to the first control button (20, 40), and a threaded element (29, 50) associated with the said end-piece and screwed on to the threaded portion of the second button so as to convert rotation of this latter into translatory movement of the end-piece substantially perpendicularly to the adjacent wall of the cup.

4. Rearview mirror according to claim 3, characterized in that the threaded element is a hollow piston (29) internally threaded and screwed on to a threaded stem (23) extending the second button (22), the said piston comprising a longitudinal key slot (30) formed on its outer peripheral surface and a pierced bottom the opening of which serves to centre an axial teat (34) integral with the end-piece (32).

5. Rearview mirror according to claim 3, characterized in that the threaded element is a threaded stem (50) extending the end-piece (49) from the side opposite from the eccentric drive finger (5), the said stem being screwed inside the second bottom (41) which is hollow and internally threaded.

6. Rearview mirror according to claim 5, characterized in that the first button (40) comprises an outer peripheral collar (44) the sides of which are clamped between an abutment surface belonging to the base (7) and a cover (45) fixed thereto, and in that the second button (41) which is housed coaxially in a bore of the first button comprises an abutment shoulder (47) bearing against a corresponding shoulder (48) of the said bore, the contact surfaces being arranged so that the friction couple on the sides of the collar is greater that the friction couple between the shoulders of the two buttons.

FIG. 1

FIG. 2

FIG. 3

0 018 297

FIG. 4

FIG. 5

2